# FASCICULE DE BREVET EUROPEEN

(11) **EP 3 755 942 B1**
(45) Date de publication et mention de la délivrance du brevet: **14.08.2024**
(21) Numéro de dépôt: 19711967.0
(22) Date de dépôt: 19.02.2019
(51) Int. Cl.: F21S 43/237, F21S 43/239, F21S 43/245, F21S 43/249, F21S 43/247, F21S 43/50, F21S 43/20, F21V 8/00, F21S 43/40, B60Q 1/26, F21S 43/30, F21S 43/31, F21S 43/33

(54) **DISPOSITIF DE SIGNALISATION POUR UN VEHICULE AUTOMOBILE**
SIGNALLEUCHTE FÜR EIN FAHRZEUG
SIGNAL LAMP FOR A VEHICLE

(30) Priorité: 19.02.2018 FR 1851412
(43) Date de publication de la demande: 30.12.2020
(73) Titulaire: Marelli Automotive Lighting France, 89330 Saint-Julien-du-Sault (FR)
(72) Inventeur: BUISSON, Alain, 78190 TRAPPES (FR); PATTERSON, Sean, 78190 TRAPPES (FR)
(74) Mandataire: Jacobacci Coralis Harle
(86) Numéro de dépôt international: PCT/FR2019/050377
(87) Numéro de publication internationale: WO 2019/158889

(56) Documents cités:
- EP-A1- 1 775 511
- EP-A1- 2 384 934
- EP-A2- 2 518 392
- DE-A1- 102008 057 538
- DE-A1- 102014 110 225
- DE-A1- 102016 208 640
- DE-A1- 102017 111 805
- FR-A1- 3 031 794
- JP-A- 2015 153 577
- US-A1- 2017 241 616

## Description

### DOMAINE TECHNIQUE AUQUEL SE RAPPORTE L'INVENTION

La présente invention concerne un dispositif de signalisation pour un véhicule automobile, comprenant au moins un écran lumineux éclairé de façon homogène et intense, comme connu des documents EP 1 775 511 A1, DE 10 2017 111 805 A1 et DE 10 2014 110 225 A1.

### ARRIERE-PLAN TECHNOLOGIQUE

Pour des raisons évidentes de sécurité, la réglementation impose aux véhicules automobiles d'être équipés de dispositifs d'éclairage et de signalisation. Au cours du temps, les dispositifs d'éclairage et de signalisation sont également devenus des éléments esthétiques permettant de personnaliser le style de chaque véhicule automobile.

Les sources lumineuses surfaciques sont particulièrement prisées pour cela, en raison de leur grande surface d'éclairage homogène pour une faible profondeur d'encombrement. Les progrès techniques récents ont permis d'envisager l'utilisation des diodes électroluminescentes organiques, également connues sous l'acronyme anglo-saxon OLED pour « Organic Light Emiting Diode », à l'intérieur comme à l'extérieur des véhicules automobiles.

Une diode électroluminescente organique ou diode EO se compose d'un substrat, de deux électrodes destinées à injecter des charges de signe contraire et une couche organique interposée entre les électrodes. La diode EO émet de la lumière lorsque les électrodes font passer un courant électrique suffisant dans la couche organique. Au moins une électrode doit être transparente pour que la lumière se diffuse à l'extérieur. Les électrodes sont alimentées en courant par l'intermédiaire de connecteurs électriques agencés à la périphérie de la diode EO. Les connecteurs électriques sont habituellement dissimulés derrière un cadre de fixation d'une certaine épaisseur et entourant la diode EO. La position des connecteurs électriques ou la présence du cadre de fixation rend difficile leur agencement pour former une seule et même surface lumineuse continue. De ce fait, les surfaces d'éclairage homogène obtenues à partir des diodes EO se limitent généralement aux dimensions de la diode EO elle-même. Pour des raisons économiques et techniques, les diodes EO actuellement utilisées dans le domaine automobile se limitent à quelques centimètres carrés. Il n'est donc pas possible de former des surfaces lumineuses homogènes de grandes dimensions et à faibles coûts.

Selon un autre inconvénient, les sources de lumière OLED sont bien plus coûteuses que les sources de lumière à ampoules à filament ou à diodes électroluminescentes (LED). De plus, la faible épaisseur d'une diode OLED par rapport à sa surface lumineuse rend celle-ci particulièrement vulnérable aux chocs. Les diodes EO sont ainsi très fragiles et nécessitent d'être utilisées avec soin et précaution. Or, l'environnement d'un véhicule automobile n'est pas favorable à l'utilisation d'une diode EO en raison des nombreuses contraintes mécaniques, notamment des vibrations et des accélérations, et des contraintes thermiques auxquelles sont soumis ses composants. Cet environnement provoque donc fréquemment des défaillances des dispositifs d'éclairage embarqués dans les véhicules automobiles utilisant des diodes EO.

L'invention vise à résoudre ces problèmes techniques en proposant un dispositif de signalisation pour véhicule automobile, comprenant au moins un écran lumineux éclairé de façon homogène et intense, de plus grandes dimensions, plus fiable et moins coûteux que les diodes électroluminescentes organiques.

### OBJET DE L'INVENTION

Pour cela, l'invention propose un dispositif de signalisation pour véhicule automobile, comprenant un guide de lumière délimité par une face avant, parallèle ou sensiblement parallèle à une face arrière, des faces latérales reliant la face avant à la face arrière. Le dispositif de signalisation comprend également une première source de lumière apte à émettre un faisceau lumineux. La première source de lumière est agencée pour éclairer une face latérale du guide de lumière pour permettre la propagation du faisceau lumineux entre la face avant et la face arrière du guide de lumière. Un écran de réflexion est agencé de sorte que sa face avant est à distance et en vis-à-vis de la face arrière du guide de lumière.

L'invention se caractérise en ce que le guide de lumière est translucide, et en ce que la face avant de l'écran de réflexion est de couleur claire et favorise une réflexion diffuse de la lumière provenant du guide de lumière. De préférence, la face avant de l'écran de réflexion est de couleur blanche et d'aspect mat.

L'invention se caractérise en ce que le guide de lumière est translucide pour favoriser une plus grande diffusion du faisceau lumineux se propageant dans ledit guide, à travers sa face avant et sa face arrière. Par le terme « translucide », on entend la propriété pour le guide de lumière de laisser passer la lumière du jour, sans qu'il soit possible de distinguer nettement les contours ou les couleurs d'un objet placé derrière ledit guide.

Afin d'accroître l'intensité lumineuse au niveau de la face avant du guide de lumière, un écran de réflexion est placé en vis-à-vis de sa face arrière. La face avant de l'écran de réflexion est de couleur claire et configurée pour permettre une réflexion diffuse de la lumière provenant du guide de lumière. Les inventeurs ont constaté de manière surprenante qu'une réflexion diffuse est nettement plus avantageuse qu'une réflexion spéculaire, pour rediriger une plus grande quantité de lumière vers le guide de lumière. La face avant de l'écran de réflexion est de préférence de couleur sensiblement banche ou blanche. L'aspect de la face avant peut être mat ou brillant. Les inventeurs ont observé une réflexion plus intense de la lumière lorsque la face avant de l'écran de réflexion est d'aspect mat.

La combinaison des propriétés translucides du guide de lumière et des propriétés de réflexion diffuse de la face avant de l'écran de réflexion, permettent l'obtention d'une surface lumineuse plus homogène et de plus forte intensité au niveau de la face avant du guide de lumière, lorsque la première source de lumière est allumée.

Selon un autre avantage, l'utilisation d'un guide de lumière permet la réalisation de surfaces lumineuses de formes et de dimensions nettement plus variées que les diodes électroluminescentes organiques. La face avant du guide de lumière peut être plane ou en reliefs, et sa surface comprise entre quelques centimètres carrés et plusieurs dizaines de centimètres carrés. La présence de l'écran de réflexion permet avantageusement d'augmenter l'intensité lumineuse émise par la première source de lumière, à travers sa face avant, pour encombrement similaire aux diodes électroluminescentes organiques.

L'invention propose ainsi un dispositif de signalisation offrant une surface lumineuse d'intensité accrue et homogène, dont les dimensions et les formes peuvent être plus diverses par rapport aux diodes électroluminescentes organiques, tout en étant plus robuste et moins coûteux.

Selon une variante de réalisation, l'écart entre la face avant de l'écran de réflexion et la face arrière du guide de lumière est compris entre 0,05 et 0,15 mm, de préférence de l'ordre de 0,1 mm. La valeur de cet écartement favorise une réflexion diffuse et homogène de la lumière au niveau de la face arrière du guide de lumière, tout en permettant le passage d'un flux d'air pour limiter tout phénomène de condensation. De préférence, la face avant de l'écran de réflexion est parallèle ou sensiblement parallèle à la face arrière du guide de lumière, afin de favoriser une réflexion diffuse encore plus homogène.

Selon une variante de réalisation, le guide de lumière est formé à partir d'un matériau transparent, et le guide de lumière comporte des éléments de diffusion de la lumière. Le caractère translucide du guide de lumière est obtenu par la présence d'éléments de diffusion. De préférence les éléments de diffusion comprennent des cavités ouvertes sur la face arrière du guide de lumière, le volume interne de chaque cavité est compris entre 48 000 µm³ et 536 000 µm³, de préférence de l'ordre de 95 000 µm³ et 268 000 µm³, de manière préférée de l'ordre de 218 000 µm³. Les cavités sont écartées, au niveau de la face arrière du guide de lumière, d'une distance comprise entre 0,12 mm et 0,7 mm, de préférence entre 0,13 mm et 0,5 mm.

Selon l'invention, le dispositif de signalisation comprend une deuxième source de lumière, agencée de sorte que l'écran de réflexion est compris entre la deuxième source de lumière et le guide de lumière, et en ce que l'écran de réflexion comporte au moins un passage permettant la transmission d'un faisceau lumineux émis par la deuxième source de lumière. De préférence, l'écran de réflexion comporte au moins un passage formant une ouverture au niveau de la face avant de l'écran de réflexion, dont la surface est comprise entre 0,03 mm² et 0,3 mm². L'écart entre les ouvertures est compris entre 0,08 mm et 0,6 mm, de préférence entre 0,12 mm et 0,45 mm.

Selon une autre variante de réalisation, la face avant du guide de lumière est recouverte, au moins partiellement, par un motif décoratif. Le motif décoratif est visible à la lumière du jour par un observateur du dispositif de signalisation. De préférence, le motif décoratif laisse passer au moins une partie du faisceau lumineux émis par la première source de lumière et/ou la deuxième source de lumière. Le motif décoratif peut être sérigraphié sur la face avant du guide de lumière.

Selon une autre variante de réalisation, le dispositif de signalisation comprend un écran translucide placé en vis-à-vis et à distance de la face avant du guide de lumière. L'écart entre la face avant du guide de lumière et l'écran translucide, est compris entre 0,05 et 0,15 mm, de préférence de l'ordre de 0,1 mm. La valeur de cet écartement permet de favoriser une diffusion plus homogène de la lumière à travers l'écran translucide, tout en permettant le passage d'un flux d'air pour limiter tout phénomène de condensation. De préférence, la face arrière de l'écran translucide, en vis-à-vis du guide de lumière, est parallèle ou sensiblement parallèle audit guide, afin de favoriser une diffusion plus homogène le long de l'écran translucide.

Selon un mode de réalisation préféré, une face avant de l'écran translucide est partiellement recouverte par un motif décoratif. Le motif décoratif est visible à la lumière du jour par un observateur du dispositif de signalisation. Le motif décoratif peut laisser passer au moins une partie du faisceau lumineux émis par la première source de lumière et/ou la deuxième source de lumière. Le motif décoratif peut être présent sur une face avant de l'écran translucide, opposée à la face avant du guide de lumière. Le motif décoratif peut être sérigraphié sur la face avant de l'écran translucide.

Bien entendu, les différentes caractéristiques, variantes et formes de réalisation mentionnées ci-dessus peuvent être associées les unes avec les autres selon diverses combinaisons, dans la mesure où elles ne sont pas incompatibles ou exclusives les unes des autres.

L'invention concerne également un véhicule automobile comprenant l'un des dispositifs de signalisation décrits ci-dessus.

### DESCRIPTION DES FIGURES

La description qui va suivre en regard des figures annexées, donnée à titre d'exemples non limitatifs, permettra de mieux comprendre en quoi consiste l'invention et comment elle peut être réalisée :
- les figures 1 et 2 illustrent respectivement une coupe transversale d'un premier mode de réalisation d'un dispositif de signalisation ne faisant pas partie de l'invention, éteint et allumé ;
- la figure 3 illustre une variante de réalisation du dispositif de signalisation représenté sur la figure 2 ;
- la figure 4 illustre une autre variante de réalisation du dispositif de signalisation représenté sur la figure 2 ;
- les figures 5 et 6 illustrent respectivement une coupe transversale d'un premier mode de réalisation d'un dispositif de signalisation selon l'invention, éteint et allumé ;
- les figures 7 et 8 illustrent respectivement une coupe transversale d'un troisième mode de réalisation d'un dispositif de signalisation ne faisant pas partie de l'invention, éteint et allumé ;
- les figures 9 et 10 illustrent respectivement une coupe transversale d'un deuxième mode de réalisation d'un dispositif de signalisation selon l'invention, éteint et allumé.

### DESCRIPTION DETAILLEE D'UN EXEMPLE DE REALISATION

Pour rappel, l'invention propose un dispositif de signalisation pour véhicule automobile, comprenant au moins un écran lumineux éclairé de façon homogène et intense, de plus grandes dimensions, plus fiable et moins coûteux que les diodes électroluminescentes organiques.

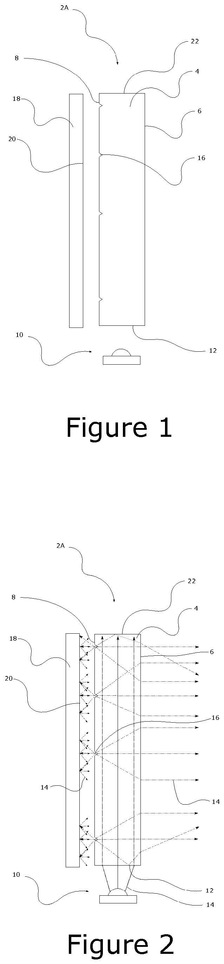

Les figures 1 et 2 illustrent un premier mode de réalisation d'un dispositif de signalisation 2A. Ce dispositif de signalisation comporte un guide de lumière 4 délimité par une face avant 6, parallèle ou sensiblement parallèle à une face arrière 8. Les faces avant et arrière sont reliées entre elles par des faces latérales qui délimitent le contour du guide de lumière 4. Le guide de lumière est de forme plane. Toutefois, cet exemple de réalisation n'est pas limitatif de l'invention, dans le sens où le guide de lumière 4 pourrait comporter des parties de forme concave et/ou convexe.

Le guide de lumière 4 est formé à partir d'un matériau transparent, laissant passer la lumière du jour en permettant de distinguer nettement les contours et les couleurs d'un objet placé derrière le guide de lumière. À titre d'exemple, le guide de lumière 4 peut être formé à partir de poly(méthacrylate de méthyle)(PMMA) et avoir une épaisseur comprise entre 1 mm et 5 mm, de préférence de l'ordre de 3 mm. Par le terme « épaisseur », on entend la plus petite distance entre la face avant 6 et la face arrière 8 du guide de lumière.

Le dispositif de signalisation 2A comporte une première source de lumière 10, agencé en vis-à-vis d'une face latérale du guide de lumière 4 dénommée par la suite face latérale d'entrée 12. Comme illustré par la figure 2, la première source de lumière 10 est orientée pour permettre la propagation d'un faisceau lumineux 14 émis par ladite source de lumière, entre la face avant 6 et la face arrière 8 du guide de lumière. La première source de lumière 10 peut comporter une ou plusieurs diodes électroluminescentes, chaque diode éclairant une partie de la face latérale d'entrée 12. De préférence, les diodes électroluminescentes sont espacées afin d'éclairer de façon homogène la face latérale d'entrée 12. La couleur et l'intensité lumineuse de chaque diode électroluminescente peuvent être modifiées au cours du temps afin de créer des animations lumineuses dans le guide de lumière 4.

Afin de favoriser une plus grande diffusion du faisceau lumineux 14, à travers la face avant 6 et la face arrière 8 du guide de lumière 4, des éléments de diffusion de la lumière sont présents dans le guide de lumière 4. Ces éléments de diffusion comprennent des cavités 16 ouvertes sur la face arrière 8 du guide de lumière. Les cavités 16 sont positionnées dans le guide de lumière 4 pour, d'une part, rendre translucide le guide de lumière, et d'autre part, favoriser une diffusion sensiblement homogène du faisceau lumineux 14 à travers la face avant 6. Par le terme « translucide », on entend la propriété pour le guide de lumière 4 de laisser passer les faisceaux lumineux de la lumière du jour, sans qu'il soit possible de distinguer nettement à travers sa face avant 6, les contours ou les couleurs d'un objet placé en vis-à-vis de sa face arrière 8.

Chaque cavité 16 délimite un volume interne qui est compris entre 48 000 µm³ et 536 000 µm³, de préférence entre 95 000 µm³ et 268 000 µm³. Selon le présent exemple, chaque cavité à un volume de l'ordre de 218 000 µm³. Les cavités sont agencées de manière à être espacées au niveau de la face arrière 8 du guide de lumière, d'une distance comprise entre 0,12 mm et 0,7 mm, de préférence entre 0,13 mm et 0,5 mm. Selon le présent exemple, les cavités 16 sont de forme conique, leur base étant délimitée par la face arrière 8 du guide de lumière, leur sommet formant un angle de l'ordre de 60°, leur hauteur étant de l'ordre de 0,05 mm et le diamètre de leur base de l'ordre de 0,1 mm.

Afin d'augmenter l'intensité du faisceau lumineux 14 diffusé à travers la face avant 6 du guide de lumière 4, un écran de réflexion 18 est placé en vis-à-vis et à distance de sa face arrière 8. L'écart entre l'écran de réflexion 18 et le guide de lumière 4 est compris entre 0,05 mm et 0,15 mm, de préférence de l'ordre de 0,1 mm. L'écran de réflexion 18 comporte une face avant 20, parallèle ou sensiblement parallèle à la face arrière 8 du guide de lumière 4. De façon avantageuse, la face avant 20 de l'écran de réflexion est de couleur blanche et d'aspect mat. La surface de la face avant 20 est configurée pour favoriser une réflexion diffuse de la lumière provenant de la face arrière du guide de lumière 4. Par réflexion diffuse, on entend le fait que la lumière est réfléchie dans toutes les directions avec, éventuellement, une intensité lumineuse plus importante en direction du guide de lumière 4. Selon le présent exemple, la face avant 20 de l'écran de réflexion est rugueuse de manière à diffuser la lumière de manière lambertienne. Selon le présent exemple, l'écran de réflexion 18 est réalisé à partir de polycarbonate et son épaisseur est de l'ordre de 0,5 mm. L'épaisseur est mesurée selon une direction normale ou sensiblement normale à la face avant 6 du guide de lumière 4.

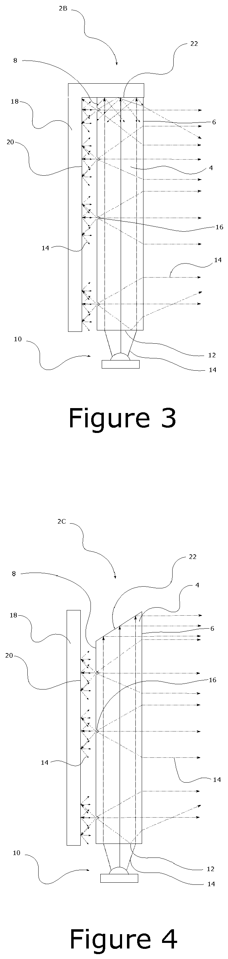

Selon une variante de réalisation illustrée par la figure 3, un dispositif de signalisation 2B comporte une face latérale du guide de lumière 4 dite de sortie 22, opposée à la face latérale d'entrée 12, recouverte par une couche favorisant la réflexion du faisceau lumineux 14 dans ledit guide. De préférence, une partie de l'écran de réflexion 18 recouvre la face latérale de sortie 22.

Les éléments identiques entre les différents modes et variantes de réalisation de l'invention, sont identifiés par les mêmes références sur les figures annexées.

Selon une autre variante de réalisation illustrée par la figure 4, un dispositif de signalisation 2C comporte une face latérale de sortie 22 formant un angle interne avec la face avant 6 du guide de lumière. La valeur de cet angle interne est choisie pour favoriser une réflexion directe du faisceau lumineux 14 vers la face avant 6 du guide de lumière 4. La valeur de cet angle interne est de préférence de l'ordre de 45°.

Selon une autre variante de réalisation non représentée, la face avant 6 du guide de lumière 4 est partiellement recouverte par un motif décoratif. Le motif décoratif est de préférence opaque à la lumière du jour. Le motif décoratif peut également être partiellement translucide au faisceau lumineux 14 émis par la première source de lumière 10, de sorte à former un motif sombre lorsque ladite source est allumée. Le motif décoratif est de préférence coloré pour former un motif de couleur(s) lorsque la première source de lumière est éteinte. Le motif décoratif peut être sérigraphié sur la face avant du guide de lumière 4.

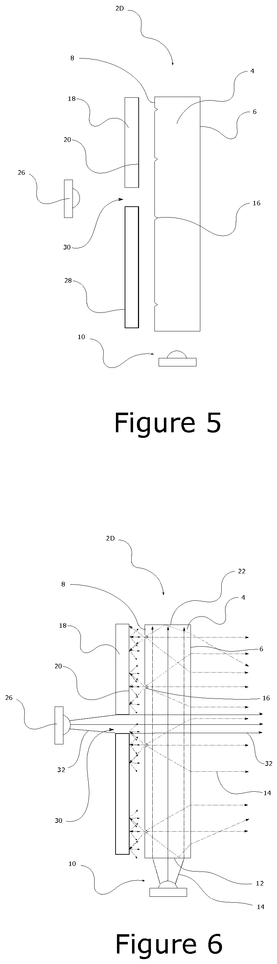

Selon un premier mode de réalisation de l'invention illustré par les figures 5 et 6, le dispositif de signalisation 2D comporte une deuxième source de lumière 26. La deuxième source de lumière est positionnée pour éclairer une face arrière 28 de l'écran de réflexion 18. L'écran de réflexion 18 comporte au moins un passage 30. Comme illustré par la figure 6, chaque passage permet à une partie d'un faisceau lumineux 32, émis par la deuxième source de lumière 26, d'éclairer la face arrière 8 du guide de lumière 4. Chaque passage 30 forme une ouverture au niveau de la face avant 20 de l'écran de réflexion, dont la surface est comprise entre 0,03 mm² et 0,3 mm². De préférence, les passages forment des ouvertures de forme circulaire. Les ouvertures sont écartées d'une distance comprise entre 0,08 mm et 0,6 mm, de préférence entre 0,12 mm et 0,45 mm.

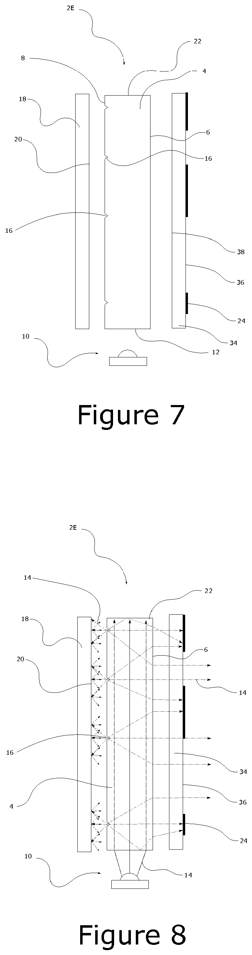

Selon un mode de réalisation illustré par les figures 7 et 8, le dispositif de signalisation 2E comporte un écran translucide 34 placé à distance et en vis-à-vis de la face avant 6 du guide de lumière 4. L'écart entre le guide de lumière 4 et l'écran translucide 34 est compris entre 0,05 mm et 0,15 mm, de préférence de l'ordre de 0,1 mm. L'écran translucide 34 comporte une face avant 36, parallèle ou sensiblement parallèle à la face avant 6 du guide de lumière 4. Selon le présent exemple, une face arrière 38 de l'écran translucide est rugueuse de manière à diffuser la lumière de manière lambertienne. La face arrière de l'écran translucide 34 est d'apparence brillante, de préférence d'apparente mate. Selon le présent exemple, l'écran translucide 34 est réalisé à partir de polycarbonate et son épaisseur est de l'ordre de 0,5 mm. L'épaisseur est mesurée selon une direction normale ou sensiblement normale à la face avant du guide de lumière 4.

Selon une variante de réalisation, le dispositif de signalisation 2E comporte un écran translucide 34 configuré pour faire converger les faisceaux lumineux provenant du guide de lumière 4, en direction d'une scène située devant le dispositif de signalisation 2. De préférence, la majorité des faisceaux lumineux émergeant de l'écran translucide 34 sont parallèles ou sensiblement parallèles à un axe perpendiculaire ou sensiblement perpendiculaire à la face avant 6 du guide de lumière 4.

Selon une autre variante de réalisation, le dispositif de signalisation 2E comporte un écran translucide 34 dont la face avant 6 est partiellement recouverte par un motif décoratif 24. Le motif décoratif est de préférence opaque à la lumière du jour. Le motif décoratif peut également être partiellement translucide au faisceau lumineux 14 émis par la première source de lumière 10, de sorte à former un motif sombre lorsque ladite source est allumée. Le motif décoratif est de préférence coloré pour former un motif de couleur(s) lorsque la première source de lumière est éteinte. Le motif décoratif peut être sérigraphié sur la face avant 36 de l'écran translucide 34.

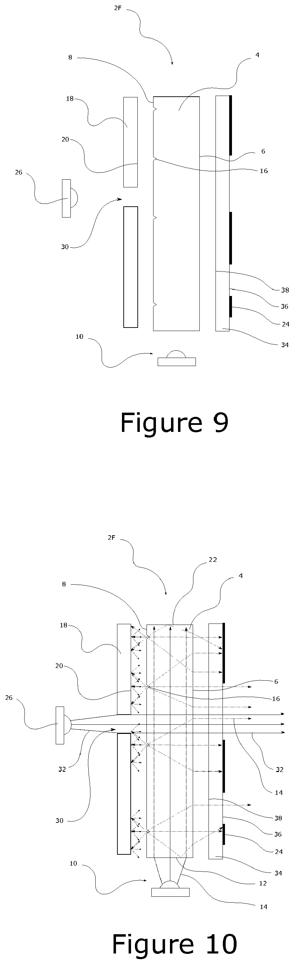

Les variantes de réalisation décrites ci-dessus peuvent être combinées pour obtenir de nouveaux modes de réalisation. Les figures 9 et 10 illustrent par exemple un nouveau mode de réalisation d'un dispositif de signalisation 2F selon l'invention, combinant les caractéristiques des dispositifs de signalisation 2D et 2E.

Selon une variante de réalisation non illustrée, un dispositif de signalisation selon l'invention peut comporter plusieurs guides de lumières, de sorte à former plusieurs surfaces lumineuses distinctes. Chaque guide de lumière peut être éclairé par une première source de lumière dédiée, dont l'intensité et la couleur peuvent être contrôlées indépendamment des autres premières sources de lumière par une unité de contrôle, afin de créer des animations visuelles et/ou adapter la luminosité des signaux lumineux en fonction de la luminosité ambiante.
En conclusion, grâce à la présence d'éléments diffusants dans le guide de lumière et l'agencement d'un écran de réflexion derrière ledit guide, un dispositif de signalisation selon l'invention permet de diffuser de façon plus homogène et plus intense, à travers sa face avant, un faisceau lumineux se propageant dans ledit guide. Pour un encombrement similaire aux diodes électroluminescentes, l'emploi d'un guide de lumière selon l'invention permet la création de surfaces lumineuses de plus grandes dimensions, de formes plus diverses, plus résistantes et moins coûteuses. La présente invention propose ainsi un nouveau type signalisation lumineux pour véhicule automobile, comprenant un ou plusieurs écrans lumineux dont l'intensité est forte et homogène. L'invention permet une plus grande variété de réalisation de dispositifs de signalisation lumineux pour véhicule automobile, permettant un design plus séduisant de ce type de dispositif pour offrir une sécurité attractive.

## Revendications

1. Dispositif de signalisation (2A, 2B, 2C, 2D, 2E, 2F) pour véhicule automobile, comprenant un guide de lumière (4) délimité par une face avant (6), parallèle ou sensiblement parallèle à une face arrière (8), des faces latérales (12, 22) reliant la face avant (6) à la face arrière (8), une première source de lumière (10) apte à émettre un faisceau lumineux (14) éclairant une face latérale (12) du guide de lumière (4), pour permettre la propagation du faisceau lumineux (14) entre la face avant (6) et la face arrière (8) du guide de lumière (4), un écran de réflexion (18) comportant une face avant (20) agencée à distance et en vis-à-vis de la face arrière (8) du guide de lumière (4), le guide de lumière (4) étant translucide, la face avant (20) de l'écran de réflexion (18) étant de couleur claire et favorisant une réflexion diffuse de la lumière provenant du guide de lumière (4), en direction du guide de lumière et à travers la face avant (6), (6) de préférence la face avant (20) de l'écran de réflexion (18) étant de couleur blanche et d'aspect mat, **caractérisé en ce qu'**il comprend une deuxième source de lumière (26) agencée de sorte que l'écran de réflexion (18) est compris entre la deuxième source de lumière (26) et le guide de lumière (4), et **en ce que** l'écran de réflexion (18) comporte au moins un passage (30) permettant la transmission d'un faisceau lumineux (32) émis par la deuxième source de lumière (26) pour éclairer la face arrière (8) du guide de lumière (4) et le traverser.

2. Dispositif de signalisation (2A, 2B, 2C, 2D, 2E, 2F) selon la revendication précédente, **caractérisé en ce que** l'écart entre la face avant (20) de l'écran de réflexion (18) et la face arrière (8) du guide de lumière (4) est compris entre 0,05 et 0,15 mm, de préférence de l'ordre de 0,1 mm.

3. Dispositif de signalisation (2A, 2B, 2C, 2D, 2E, 2F) selon l'une des revendications précédentes, **caractérisé en ce que** le guide de lumière (4) est formé à partir d'un matériau transparent, et **en ce que** le guide de lumière (4) comporte des éléments de diffusion de la lumière.

4. Dispositif de signalisation (2A, 2B, 2C, 2D, 2E, 2F) selon la revendication précédente, **caractérisé en ce que** les éléments de diffusion comprennent des cavités (16) ouvertes sur la face arrière (8) du guide de lumière, et **en ce que** le volume interne de chaque cavité est compris entre 48 000 µm³ et 536 000 µm³, de préférence de l'ordre de 95 000 µm³ et 268 000 µm³, de manière préférée de l'ordre de 218 000 µm³

5. Dispositif de signalisation (2A, 2B, 2C, 2D, 2E, 2F) selon la revendication 4, **caractérisé en ce que** les cavités (16) sont écartées, au niveau de la face arrière (8) du guide de lumière (4), d'une distance comprise entre 0,12 mm et 0,7 mm, de préférence entre 0,13 mm et 0,5 mm.

6. Dispositif de signalisation (2D) selon l'une des revendications précédentes, **caractérisé en ce que** le passage (30) forme une ouverture au niveau de sa face avant (20), dont la surface est comprise entre 0,03 mm² et 0,3 mm².

7. Dispositif de signalisation selon l'une des revendications précédentes, **caractérisé en ce que** la face avant (6) du guide de lumière (4) est recouverte, au moins partiellement, par un motif décoratif.

8. Dispositif de signalisation selon la revendication précédente, **caractérisé en ce que** le motif décoratif laisse passer au moins une partie du faisceau lumineux (14) émis par la première source de lumière (10).

9. Dispositif de signalisation (2E, 2F) selon l'une des revendications précédentes, **caractérisé en ce qu'**il comprend un écran translucide (34) placé en vis-à-vis et à distance de la face avant (6) du guide de lumière (4).

10. Dispositif de signalisation (2E, 2F) selon la revendication précédente, **caractérisé en ce que** l'écart entre la face avant (6) du guide de lumière (4) et l'écran translucide, est compris entre 0,05 mm et 0,15 mm, de préférence de l'ordre de 0,1 mm.

11. Dispositif de signalisation (2E, 2F) selon la revendication 9 ou 10, **caractérisé en ce qu'**une face avant (36) de l'écran translucide (34) est partiellement recouverte par motif décoratif (24).

12. Dispositif de signalisation (2E, 2F) selon la revendication précédente, **caractérisé en ce que** le motif décoratif (24) laisse passer au moins une partie du faisceau lumineux (14) émis par la première source de lumière (10).

13. Dispositif de signalisation (2E, 2F) selon la revendication 12, **caractérisé en ce que** le motif décoratif (24) est présent sur une face avant (36) de l'écran translucide (34), opposée à la face avant (6) du guide de lumière (4).

14. Véhicule automobile comprenant un dispositif de signalisation (2A, 2B, 2C, 2D, 2E, 2F) selon l'une des revendications précédentes.

## Patentansprüche

1. Signalleuchte (2A, 2B, 2C, 2D, 2E, 2F) für ein Kraftfahrzeug mit einem Lichtleiter (4), der durch eine Vorderseite (6) begrenzt ist, die zu einer Rückseite (8) parallel oder im Wesentlichen parallel ist, wobei seitliche Seiten (12, 22) die Vorderseite (6) mit der Rückseite (8) verbinden, einer ersten Lichtquelle (10), die geeignet ist, einen Lichtstrahl (14) auszustrahlen, der eine seitliche Seite (12) des Lichtleiters (4) beleuchtet, um die Ausbreitung des Lichtstrahls (14) zwischen der Vorderseite (6) und der Rückseite (8) des Lichtleiters (4) zu ermöglichen, einem Reflexionsschirm (18), der eine Vorderseite (20) aufweist, die in einem Abstand zu und gegenüber der Rückseite (8) des Lichtleiters (4) angeordnet ist, wobei der Lichtleiter (4) durchsichtig ist, die Vorderseite (20) des Reflexionsschirms (18) von heller Farbe ist und eine gestreute Reflexion des vom Lichtleiter (4) kommenden Lichts zum Lichtleiter hin und durch die Vorderseite (6) hindurch fördert, wobei die Vorderseite (20) des Reflexionsschirms (18) vorzugsweise von weißer Farbe und mattem Aspekt ist,
**dadurch gekennzeichnet, daß** sie eine zweite Lichtquelle (26) aufweist, die so angeordnet ist, daß der Reflexionsschirm (18) zwischen der zweiten Lichtquelle (26) und dem Lichtleiter (4) angeordnet ist, und daß der Reflexionsschirm (18) mindestens einen Durchgang (30) aufweist, der die Übertragung eines von der zweiten Lichtquelle (26) ausgestrahlten Lichtstrahls (32) ermöglicht, um die Rückseite (8) des Lichtleiters (4) zu beleuchten und diesen zu durchqueren.

2. Signalleuchte (2A, 2B, 2C, 2D, 2E, 2F) gemäß dem vorangehenden Anspruch, **dadurch gekennzeichnet, daß** der Abstand zwischen der Vorderseite (20) des Reflexionsschirms (18) und der Rückseite (8) des Lichtleiters (4) zwischen 0,05 und 0,15 mm, vorzugsweise in der Größenordnung von 0,1 mm, beträgt.

3. Signalleuchte (2A, 2B, 2C, 2D, 2E, 2F) gemäß einem der vorangehenden Ansprüche, **dadurch gekennzeichnet, daß** der Lichtleiter (4) aus einem durchsichtigen Material gebildet ist und daß der Lichtleiter (4) Elemente zum Streuen des Lichts aufweist.

4. Signalleuchte (2A, 2B, 2C, 2D, 2E, 2F) gemäß dem vorangehenden Anspruch, **dadurch gekennzeichnet, daß** die Elemente zum Streuen zur Rückseite (8) des Lichtleiters offene Aushöhlungen (16) aufweisen und daß das Innenvolumen jeder Aushöhlung zwischen 48.000 µm³ und 536.000 µm³, vorzugsweise etwa zwischen 95.000 µm³ und 268.000 µm³, in bevorzugter Weise etwa 218.000 µm³ beträgt.

5. Signalleuchte (2A, 2B, 2C, 2D, 2E, 2F) gemäß Anspruch 4, **dadurch gekennzeichnet, daß** die Aushöhlungen (16) an der Rückseite (8) des Lichtleiters (4) einen Abstand zwischen 0,12 mm und 0,7 mm, vorzugsweise zwischen 0,13 mm und 0,5 mm aufweisen.

6. Signalleuchte (2D) gemäß einem der vorangehenden Ansprüche, **dadurch gekennzeichnet, daß** der Durchgang (30) an seiner Vorderseite (20) eine Öffnung bildet, deren Oberfläche zwischen 0,03 mm² und 0,3 mm² beträgt.

7. Signalleuchte gemäß einem der vorangehenden Ansprüche, **dadurch gekennzeichnet, daß** die Vorderseite (6) des Lichtleiters (4) mindestens teilweise mit einem dekorativen Motiv bedeckt ist.

8. Signalleuchte gemäß dem vorangehenden Anspruch, **dadurch gekennzeichnet, daß** das dekorative Motiv mindestens einen Teil des von der ersten Lichtquelle (10) ausgestrahlten Lichtstrahls (14) durchläßt.

9. Signalleuchte (2E, 2F) gemäß einem der vorangehenden Ansprüche, **dadurch gekennzeichnet, daß** sie einen gegenüber der und in einem Abstand zur Vorderseite (6) des Lichtleiters (4) angeordneten durchsichtigen Schirm (34) aufweist.

10. Signalleuchte (2E, 2F) gemäß dem vorangehenden Anspruch, **dadurch gekennzeichnet, daß** der Abstand zwischen der Vorderseite (6) des Lichtleiters (4) und dem durchsichtigen Schirm zwischen 0,05 mm und 0,15 mm, vorzugsweise etwa 0,1 mm beträgt.

11. Signalleuchte (2E, 2F) gemäß Anspruch 9 oder 10, **dadurch gekennzeichnet, daß** eine Vorderseite (36) des durchsichtigen Schirms (34) teilweise mit einem dekorativen Motiv (24) bedeckt ist.

12. Signalleuchte (2E, 2F) gemäß dem vorangehenden Anspruch, **dadurch gekennzeichnet, daß** das dekorative Motiv (24) mindestens einen Teil des von der ersten Lichtquelle (10) ausgestrahlten Lichtstrahls (14) durchläßt.

13. Signalleuchte (2E, 2F) gemäß Anspruch 12, **dadurch gekennzeichnet, daß** das dekorative Motiv (24) auf einer von der Vorderseite (6) des Lichtleiters (4) abgewandten Vorderseite (36) des durchsichtigen Schirms (34) vorhanden ist.

14. Kraftfahrzeug mit einer Signalleuchte (2A, 2B, 2C, 2D, 2E, 2F) gemäß einem der vorangehenden Ansprüche.

## Claims

1. A signalling device (2A, 2B, 2C, 2D, 2E, 2F) for a motor vehicle, comprising a light guide (4) delimited by a front face (6), parallel or substantially parallel to a rear face (8), lateral faces (12, 22) connecting the front face (6) to the rear face (8), a first light source (10) capable of emitting a light beam (14) illuminating a lateral face (12) of the light guide (4) to allow the propagation of the light beam (14) between the front face (6) and the rear face (8) of the light guide (4), a reflection screen (18) including a front face (20) arranged remote from and opposite the rear face (8) of the light guide (4), the light guide (4) being translucent, the front face (20) of the reflection screen (18) being light-coloured and favouring a diffuse reflection of the light coming from the light guide (4), towards the light guide and through the front face (6), the front face (20) of the reflection screen (18) being preferably of white colour and matt appearance, **characterized in that** it comprises a second light source (26), arranged so that the reflection screen (18) is comprised between the second light source (26) and the light guide (4), and **in that** the reflection screen (18) includes at least one passage (30) allowing the transmission of a light beam (32) emitted by the second light source (26) to illuminate the rear face (8) of the light guide (4) and pass through it.

2. The signalling device (2A, 2B, 2C, 2D, 2E, 2F) according to the preceding claim, **characterized in that** the spacing between the front face (20) the reflection screen (18) and the rear face (8) of the light guide (4) is comprised between 0.05 and 0.15 mm, preferably of the order of 0.1 mm.

3. The signalling device (2A, 2B, 2C, 2D, 2E, 2F) according to one of the preceding claims, **characterized in that** the light guide (4) is formed of a transparent material, and **in that** the light guide (4) includes light-scattering elements.

4. The signalling device (2A, 2B, 2C, 2D, 2E, 2F) according to the preceding claim, **characterized in that** the scattering elements comprise cavities (16) opening to the rear face (8) of the light guide, and **in that** the inner volume of each cavity is comprised between 48 000 µm³ and 536 000 µm³, preferably of the order of 95 000 µm³ and 268 000 µm³, in a preferred manner of the order of 218 000 µm³.

5. The signalling device (2A, 2B, 2C, 2D, 2E, 2F) according to claim 4, **characterized in that** the cavities (16) are spaced apart, at the rear face (8) of the light guide (4), by a distance comprised between 0.12 mm and 0.7 mm, preferably between 0.13 mm and 0.5 mm.

6. The signalling device (2D) according to one of the preceding claims, **characterized in that** the passage (30) forms an opening at its front face (20), whose surface area is comprised between 0.03 mm² and 0.3 mm².

7. The signalling device according to one of the preceding claims, **characterized in that** the front face (6) of the light guide (4) is covered, at least partially, with a decorative pattern.

8. The signalling device according to the preceding claim, **characterized in that** the decorative pattern lets through at least a part of the light beam (14) emitted by the first light source (10).

9. The signalling device (2E, 2F) according to one of the preceding claims, **characterized in that** it comprises a translucent screen (34) placed opposite and remote from the front face (6) of the light guide (4).

10. The signalling device (2E, 2F) according to the preceding claim, **characterized in that** the spacing between the front face (6) of the light guide (4) and the translucent screen is comprised between 0.05 mm and 0.15 mm, preferably of the order of 0.1 mm.

11. The signalling device (2E, 2F) according to claim 9 or 10, **characterized in that** a front face (36) of the translucent screen (34) is partially covered with a decorative pattern (24).

12. The signalling device (2E, 2F) according to the preceding claim, **characterized in that** the decorative pattern (24) lets through at least a part of the light beam (14) emitted by the first light source (10).

13. The signalling device (2E, 2F) according to claim 12, **characterized in that** the decorative patter (24) is present on a front face (36) of the translucent screen (34), opposed to the front face (6) of the light guide (4).

14. A motor vehicle comprising a signalling device (2A, 2B, 2C, 2D, 2E, 2F) according to one of the preceding claims.
